# EUROPÄISCHE PATENTSCHRIFT

(11) **EP 1 166 096 B1**
(45) Veröffentlichungstag und Bekanntmachung des Hinweises auf die Patenterteilung: **09.01.2008**
(21) Anmeldenummer: 00918696.6
(22) Anmeldetag: 11.03.2000
(51) Int. Cl.: G01N 27/417

(54) **ELEKTROCHEMISCHER GASSENSOR**
ELECTROCHEMICAL GAS SENSOR
DETECTEUR ELECTROCHIMIQUE DE GAZ

(30) Priorität: 18.03.1999 DE 19912102
(43) Veröffentlichungstag der Anmeldung: 02.01.2002
(73) Patentinhaber: ROBERT BOSCH GMBH, 70442 Stuttgart (DE)
(72) Erfinder: BLOEMER, Bernhard, D-70435 Stuttgart (DE); STROHMAIER, Rainer, D-70563 Stuttgart (DE); SPRINGHORN, Carsten, D-70197 Stuttgart (DE); HEIMANN, Detlef, D-70839 Gerlingen (DE); RENZ, Hans-Joerg, D-70771 Leinfelden-Echterdingen (DE); NEUMANN, Harald, Farmington Hills, 4833 (US); SCHUELE, Margret, D-71263 Weil der Stadt (DE); SCHUMANN, Bernd, D-71277 Rutesheim (DE); MOSER, Thomas, D-71701 Schwieberdingen (US); THIEMANN-HANDLER, Sabine, D-70435 Stuttgart (DE)
(86) Internationale Anmeldenummer: PCT/DE2000/000769
(87) Internationale Veröffentlichungsnummer: WO 2000/057169

(56) Entgegenhaltungen:
- EP-A- 0 678 740
- EP-A- 0 869 356
- EP-A- 0 897 112
- DE-A- 19 827 469

## Beschreibung

Die Erfindung betrifft einen elektrochemischen Gassensor zur Bestimmung der Konzentration von Gaskomponenten in Gasgemischen, insbesondere zur Bestimmung der Konzentration von NOx und HC, nach dem Oberbegriff der unabhängigen Ansprüche 1 und 13.

### Stand der Technik

Aus der EP 678 740 A1, ist ein Gassensor der gattungsgemäßen Art zur Bestimmung der NOx-Konzentration in einem Gasgemisch bekannt, bei dem zwei Meßgasräume mit jeweils einer Pumpzelle in einer Schichtebene eines planaren, sauerstoffionenleitenden keramischen Trägers nebeneinander angeordnet sind.
Das Meßgas strömt über eine erste Diffusionsöffnung in den ersten Meßgasraum ein, in dem eine erste innere Pumpelektrode angeordnet ist. Eine äußere Pumpelektrode ist dem Meßgas unmittelbar ausgesetzt. Die erste innere Pumpelektrode und die äußere Pumpelektrode bilden die erste Pumpzelle. Mittels der ersten Pumpzelle wird im ersten Meßgasraum ein vorbestimmter Sauerstoffpartialdruck durch Hinein- oder Herauspumpen von Sauerstoff eingestellt. Eine Konzentrationszelle (Nernst-Zelle) weist eine Meßelektrode und eine mit einer Luftatmosphäre in Verbindung stehende Referenzelektrode auf, wobei die Messelektrode im ersten Messgasraum angeordnet ist. Zur Einstellung eines konstanten Sauerstoffpartialdrucks im ersten Messgasraum wird die elektrische Spannung (elektromotorische Kraft) der Konzentrationszelle mittels einer Pumpspannung der ersten Pumpzelle auf einen konstanten Wert eingeregelt. Der erste und der zweite Messgasraum ist mit einem Verbindungskanal, der eine weitere Diffusionsöffnung darstellt, verbunden, wobei über den Verbindungskanal die auf konstanten Sauerstoffpartialdruck eingestellte Atmosphäre in den zweiten Messgasraum diffundiert. Im zweiten Messgasraum ist eine weitere innere Pumpelektrode angeordnet, die mit der im Luftreferenzkanal angeordneten Referenzelektrode zusammenwirkt und die zweite Pumpzelle bildet. Die weitere innere Pumpelektrode ist aus einem Material, beispielsweise aus Rhodium ausgeführt, das eine Reduktion von NO zu N₂ und O₂ realisiert. Der an der weiteren inneren Pumpelektrode entstehende, reduzierte Sauerstoff wird über eine angelegte Pumpspannung zur Referenzelektrode gepumpt und dort in die Luftatmosphäre freigesetzt. Da die Atmosphäre im ersten Messgasraum auf einen konstanten Sauerstoffpartialdruck gehalten wird, ist der Pumpstrom zum Abpumpen des reduzierten Sauerstoffs aus dem zweiten Messgasraum proportional zur NOx-Konzentration. Die hintereinander angeordneten Messgasräume und Pumpzellen werden auf unterschiedlichen Temperaturen gehalten, wobei die Temperatur an den Elektroden im ersten Messgasraum niedriger eingestellt wird als die Temperatur an der Elektrode im zweiten Messgasraum. Der Sensorelementaufbau ist relativ kompliziert und eignet sich ausschließlich zur Bestimmung von NOx.

Weiterhin ist aus der EP 0 897 112 A2 ein elektrochemischer Sensor zur Bestimmung der Stickoxidkonzentration bekannt, der zwei Messgasräume und entsprechende Messelektroden aufweist. Aus der EP 0 869 356 A2 ist ein weiterer elektrochemischer Gassensor zur Bestimmung der Stickoxidkonzentration eines Gasgemisches bekannt. Auch dieser weist zwei miteinander in Verbindung stehende Messgasräume und entsprechende Messelektroden auf.

### Vorteile der Erfindung

Der erfindungsgemäße Gassensor mit den kennzeichnenden Merkmalen des Anspruchs 1 hat den Vorteil, dass ein zur Bestimmung des Lambda-Wertes in Gasgemischen verwendeter fertigungstechnisch ausgereifter Basissensor genutzt wird, der lediglich durch mindestens eine weitere Festelektrolytschicht mit zwei weiteren Elektroden ergänzt werden muß. Als Basissensor dient ein sogenannter Breitbandsensor, der aus einer Pumpzelle mit innerer und äußerer Pumpelektrode und einer Konzentrationszelle mit Meßelektrode und Referenzelektrode besteht. Die Meßelektrode und die innere Pumpelektrode sind in einem Gasraum gegenüberliegend angeordnet. Dieser Gasraum bildet bei dem erfindungsgemäßen Sensorelement den zweiten Meßgasraum. Die Verwendung des fertigungstechnisch ausgereiften Lambda-Basissensors bietet erhebliche Kostenvorteile gegenüber einem für jeden Anwendungsfall spezialisierten Sensorelementaufbau.

Ein weiterer Aspekt der Erfindung besteht darin, daß der Gassensor mit einem einzigen Sensorelementaufbau sowohl als NOx-Sensor als auch als HC-Sensor verwendet werden kann. Für die entsprechende Verwendung ist lediglich der Abgriff an den Elektrodenanschlüssen entsprechend zu wählen und die Auswerteschaltung entsprechend anzupassen. Bei der Verwendung des Gassensors als HC-Sensor wird die im ersten Meßgasraum angeordnete erste Elektrode als Mischpotentialelektrode genutzt. Bei der Verwendung des Gassensors als NOx-Sensor wird die im zweiten Meßgasraum angeordnete dritte Elektode als NOxreduzierende Elektrode eingesetzt. Durch die breitere Anwendung des Gassensors werden weitere Kostenvorteile wirksam.

Durch die in den Unteransprüchen aufgeführten Maßnahmen sind vorteilhafte Weiterbildungen und Verbesserungen des im Hauptanspruch angegebenen Sensorelements möglich. Die Anordnung von zwei Gaszutrittsöffnungen symmetrisch zum Verbindungskanal gewährleistet einen ausreichenden Gasaustausch des Meßgases mit der ersten Meßkammer und damit eine geringe Ansprechzeit. Dadurch sind außerdem höhere Pumpströme für die erste Pumpzelle möglich.

### Zeichnung

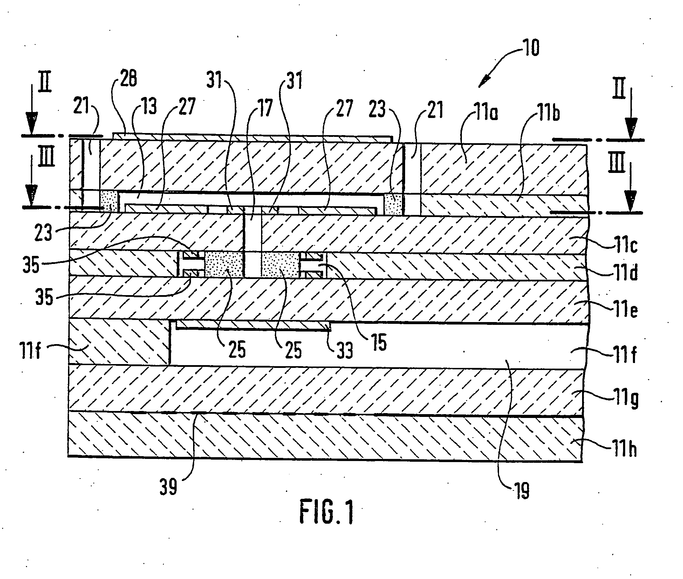

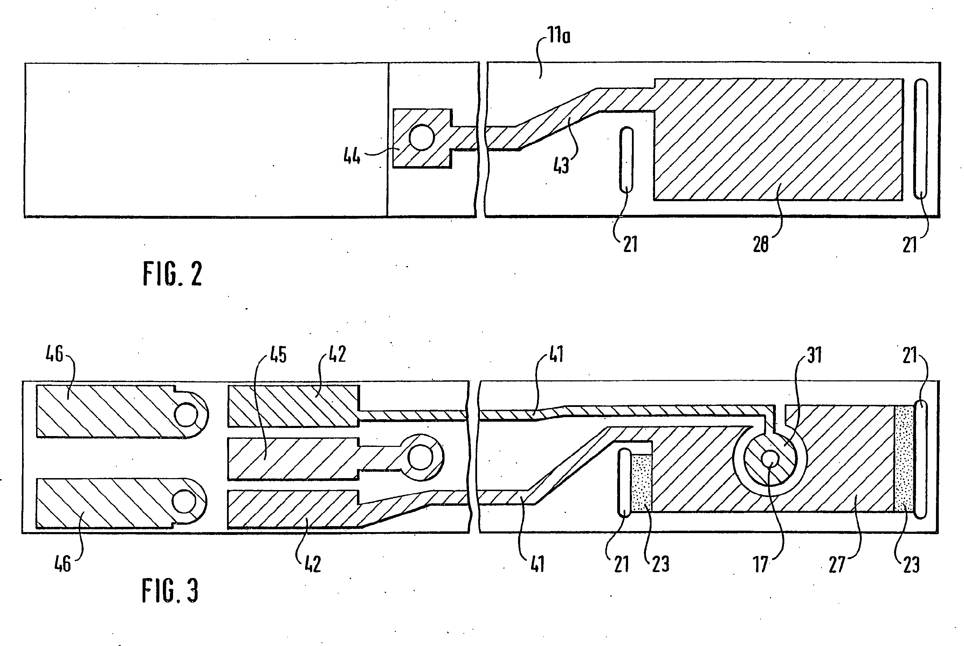

Ein Ausführungsbeispiel der Erfindung ist in der Zeichnung dargestellt und in der nachfolgenden Beschreibung näher erläutert. Es zeigen Figur 1 einen Querschnitt durch ein Sensorelement eines erfindungsgemäßen Gassensors, Figur 2 einen Schnitt durch eine Schichtebene gemäß der Linie II - II in Figur 1 und Figur 3 einen Schnitt durch eine Schichtebene nach der Linie III - III in Figur 1.

### Ausführungsbeispiel

Die Figuren 1, 2 und 3 zeigen einen prinzipiellen Aufbau einer bevorzugten Ausführungsform der vorliegenden Erfindung. Mit 10 ist ein planares Sensorelement eines elektrochemischen Gassensors bezeichnet, das beispielsweise eine Mehrzahl von sauerstoffionenleitenden Festelektrolytschichten 11a, 11b, 11c, 11d, 11e, 11f, 11g und 11h aufweist. Die Festelektrolytschichten 11a bis 11h werden dabei als keramische Folien ausgeführt und bilden einen planaren keramischen Körper. Die integrierte Form des planaren keramischen Körpers des Sensorelements 10 wird durch Zusammenlaminieren der mit Funktionsschichten bedruckten keramischen Folien und anschließendem Sintern der laminierten Struktur in an sich bekannter Weise hergestellt. Jede der Festelektrolytschichten 11a bis 11h sind aus sauerstoffionenleitendem Festelektrolytmaterial, wie beispielsweise stabilisiertem ZrO₂ ausgeführt.

Das Sensorelement 10 hat einen ersten Meßgasraum 13 und einen zweiten Meßgasraum 15. Die beiden Meßgasräume 13, 15 liegen in unterschiedlichen Schichtebenen übereinander und sind über einen Verbindungskanal 17, der beispielsweise als Bohrung ausgeführt ist, miteinander verbunden. Unabhängig von den beiden Meßgasräumen 13, 15 ist beispielsweise in einer weiteren Schichtebene ein Referenzgaskanal 19 angeordnet, der an einem Ende aus dem planaren Körper des Sensorelements 10 herausgeführt und mit der Luftatmosphäre in Verbindung steht.

Das Sensorelement 10 hat ferner zwei Gaseintrittsöffnungen 21, die das Meßgas in den ersten Meßgasraum 13 leiten. Die beiden Gaseintrittsöffnungen 21 sind beispielsweise symmetrisch zu einer durch die Mittellinie des Verbindungskanals 17 verlaufenden Ebene angeordnet (Figur 3). An den Eingängen zum ersten Meßgasraum 13 ist in Diffusionsrichtung des Meßgases hinter den Gaseintrittsöffnungen 21 eine erste Diffusionsbarriere 23 aus beispielsweise porösem keramischen Material ausgebildet. Es ist aber genauso denkbar, die Gaseintrittsöffnungen 21 selbst mit porösem keramischen Material zu füllen, so daß sich dann die Diffusionsbarriere 23 innerhalb der Gaseintrittsöffnungen 21 befindet.

In Diffusionsrichtung des Meßgases ist am Ende des Verbindungskanals 17 und vor dem zweiten Meßgasraum 15 eine zweite Diffusionsbarriere 25 ausgebildet. Der zweite Meßgasraum 15 ist beispielsweise kreisringförmig ausgeführt, so daß die zweite Diffusionsbarriere 25 ebenfalls kreisringförmig um die am strömungsrichtungsseitigen Ende sich befindende Öffnung des Verbindungskanals 17 positioniert ist.

Im ersten Meßgasraum 13 ist eine erste innere Elektrode 27 und eine zweite innere Elektrode 31 angeordnet. An der äußeren Großfläche der Festelektrolytschicht 11a befindet sich eine äußeren Elektrode 28, die mit einer nicht dargestellten porösen Schutzschicht bedeckt sein kann und die dem Meßgas unmittelbar ausgesetzt ist. Im vorliegenden Ausführungsbeispiel sind die inneren Elektroden 27, 31 in Diffusionsrichtung des Meßgases hintereinander angeordnet. Es ist aber auch möglich, die inneren Elektroden 27, 31 gegenüberliegend im ersten Meßgasraum anzuordnen.

Im zweiten Meßgasraum 15 befindet sich eine dritte innere Elektrode 35, die im vorliegenden Ausführungsbeispiel aus zwei sich gegenüberliegenden, ringförmigen Teilelektroden besteht. Im Referenzgaskanal 19 befindet sich eine der Luftatmosphäre ausgesetzte weitere Elektrode 33. Es ist jedoch auch eine Ausführungsform denkbar, bei der die vierte Elektrode 33 ebenfall dem Meßgas ausgesetzt ist.

Um das Sensorelement 10 sowohl als NOx- als auch als HC-Sensor betreiben zu können, sind die erste innere Elektrode 27 und die dritte innere Elektrode 35 aus speziellen Elektrodenmaterialien auszuführen.

Für die Betriebsweise als HC-Sensor ist die erste innere Elektrode 27 aus einem Material ausgeführt, das diese Elektrode als Mischpotentialelektrode wirken läßt, wobei die Mischpotentialelektrode die Gasgleichgewichtseinstellung des Gasgemisches nicht oder nicht vollständig zu katalysieren vermag. Ein derartiges Material ist beispielsweise Gold oder eine Gold/Platin-Legierung mit vorzugsweise 1 Gew. % Gold. Die äußere Elektrode 28, die zweite innere Elektrode 31 und die weitere Elektrode 33 bestehen aus einem katalytisch aktiven Material, beispielsweise aus Platin.

Für die Betriebsweise als NOx-Sensor ist die im zweiten Meßgasraum 15 angeordnete dritte innere Elektrode 35 aus einem Material ausgeführt, das NOx katalytisch zu reduzieren vermag. Ein solches Material ist beispielsweise Rhodium oder eine Rhodium/Platin-Legierung. Wichtig für das Betreiben als NOx-Sensor ist, daß die der NOx-sensitiven Elektrode 35 in Diffusionsrichtung des Meßgases vorgelagerten Elektroden 27, 31 im wesentlichen keine Reduktion von NOx erlauben. Das Elektrodenmaterial für alle Elektroden wird dabei in an sich bekannter Weise als Cermet eingesetzt, um mit den keramischen Folien zu versintern.

Gemäß Figur 2 und 3 sind die Elektroden 27 und 31 mit in der Schichtebene zwischen den Festelektrolytschichten 11b und 11c geführten Leiterbahnen 41 mit an der Oberfläche des Sensorelements 10 ausgebildeten Kontaktierstellen 42 verbunden. Die äußere Elektrode 28 ist auf der Großfläche der Festelektrolytschicht 11a mit einer Leiterbahn 43 mit einer Durchkontaktierstelle 44 verbunden, die zu der darunterliegenden Schichtebene führt und dort eine weitere Kontaktstelle 45 ausbildet. Die beiden gegenüberliegenden Teilelektroden der Elektrode 35 sind innerhalb des keramischen Trägers kontaktiert und wie die weitere Elektrode 33 mit nicht dargestellten weiteren Leiterbahnen zu an der Oberfläche des Sensorelements 10 ausgebildeten weiteren Kontaktstellen 46 geführt.

In den keramischen Körper des Sensorelements 10 ist ferner zwischen zwei nicht näher dargestellten elektrischen Isolationsschichten ein elektrischer Widerstandsheizer 39 eingebettet. Der Widerstandsheizer 39 dient zum Aufheizen des Sensorelements 10 auf die notwendige Betriebstemperatur. Dabei liegt an den im wesentlichen übereinanderliegenden Elektroden 27, 28, 31, 33, 35 im wesentlichen die gleiche Temperatur vor. Die Einstellung gezielter Termperaturunterschiede an den einzelnen Elektroden ist nicht beabsichtigt und auch nicht möglich. Der Widerstandsheizer 39 weist an der zu den Kontaktstellen 42, 45, 46 der gegenüberliegenden äußeren Großfläche des Sensorelements 10 nicht dargestellte Heizerkontaktstellen auf.

Der in Figur 1 gezeigte Aufbau des erfindungsgemäßen Sensorelements 10 nutzt einen sogenannten Breitbandsensor zur Bestimmung des Lambda-Wertes als Basissensor. Der Basissensor wird dabei von den Festelektrolytschichten 11c, 11d, 11e, 11f, 11g und 11h sowie den Elektroden 27, 33 und 35 gebildet. Die Elektroden 27 und die im Meßgasraum 15 gegenüberliegende erste Teilelektrode der Elektrode 35 bilden bei dem Breitbandsensor eine Pumpzelle und die zweite Teilelektrode der Elektrode 35 mit der weiteren Elektrode 33 die Konzentrationszelle, wobei die Elektrode 33 als Referenzelektrode wirkt. Zur Weiterbildung als erfindungsgemäßes Sensorelement 10 werden die Festelektrolytschichten 11a und 11b mit den Elektroden 27 und 28 mit dem Bassissensor verbunden, wobei in der Festelektrolytfolie 11b der Meßgasraum 13 ausgeführt ist. Es ist aber genauso eine Ausführungsform denkbar, bei der lediglich die Festelektrolytfolie 11a verwendet wird. Bei dieser Ausführungsform ist dann in die Festelektrolytfolie 11a auch der Meßgasraum 13 integriert.

Das beschriebene Sensorelement 10 kann sowohl als NOx-Senor als auch als HC-Sensor verwendet werden, wobei je nach Anwendung die einzelnen Elektroden 27, 28, 31, 33, 35 unterschiedliche Funktionen ausführen. Dazu wird eine den Funktionen der Elektroden angepaßte elektrische Beschaltung der Elektroden 27, 28, 31, 33, 35 vorgenommen.

### Betriebsweise als NOx-Sensor

Bei der Verwendung des Sensorelements 10 als NOx-Sensor werden die äußere Elektrode 28 und die erste innere Elektrode 27 als Pumpelektroden einer ersten Pumpzelle betrieben. Die zweite innere Elektrode 31 ist mit der als Referenzelektrode wirkenden weiteren Elektrode 33 als Konzentrationszelle geschaltet. An die Elektroden 27, 28 wird eine Pumpspannung angelegt, mittels der im ersten Meßgasraum 13 durch ein Zu-oder Abpumpen von Sauerstoff ein konstanter Sauerstoffpartialdruck eingestellt wird. Dabei wird die an die Elektroden 27, 28 angelegte Pumpspannung derart geregelt, daß sich an den Elektroden 31, 33 der Konzentrationszelle ein konstanter Spannungwert von beispielsweise 450 mV einstellt. Diese Spannung entspricht einem Wert von Lambda = 1. Bei einem mageren Meßgas (Lambda > 1) wird von der ersten Pumpzelle Sauerstoff aus dem ersten Meßgasraum 13 herausgepumpt. Bei einem fetten Meßgas (Lambda < 1) wird vom Meßgas Sauerstoff in den ersten Meßgasraum 13 hineingepumpt. Durch die Wahl des Elektrodenmaterials und/oder durch eine entsprechende Pumpspannung wird sichergestellt, daß beim Pumpen des Sauerstoffs kein NOx an den Elektroden 27, 31 abgepumpt wird.

Die auf einen konstanten Sauerstoffpartialdruck eingestellte Meßatmosphäre gelangt nun über den Verbindungskanal 17 und die zweite Diffusionsbarriere 25 in den zweiten Meßgasraum 15. Die sich im zweiten Meßgasraum 15 befindende dritte innere Elektrode 35 wird mit der weiteren Elektrode 33 als zweite Pumpzelle betrieben. Dabei wirkt aufgrund des katalytischen Materials die dritte innere Elektrode 35 als NOx-sensitive Elektrode, an der das NOx gemäß der Reaktion NO ⇒ ½ N₂ + ½ O₂ reduziert wird. Dabei wirkt die mit der Elektrode 31 zusammenwirkende Referenzelektrode 33 gleichzeitig als zweite Pumpelektrode, an der der aus dem zweiten Meßgasraum 15 abgepumpte Sauerstoff in die Luftatmosphäre freigesetzt wird. Aufgrund der einen Diffusionswiderstand bildenden Diffusionsbarriere 25 wird das in den zweiten Meßgasraum 15 eindiffundierende NOx vollständig von der Elektrode 35 abgepumpt. Dadurch stellt sich an der als weitere Pumpzelle wirkenden elektrochemischen Zelle ein Grenzstrom ein, der als Meßsignal aufgenommen die NOx-Konzentration angibt.

### Betriebsweise als HC-Sensor

Wird das Sensorelement 10 als HC-Sensor eingesetzt, wird gegenüber der Verwendung als NOx-Sensor eine andere Beschaltung der Elektroden 27, 28, 31, 33, 35 vorgenommen. Die Elektroden 33, 35 werden als Pumpelektroden betrieben, jedoch gegenüber der NOx-Anwendung derart, daß Sauerstoff aus der Luftatmosphäre in den zweiten Meßgasraum 15 hineingepumpt wird. Dabei wird im zweiten Meßgasraum 15 eine künstliche Meßatmosphäre mit einer gegenüber dem Meßgas erhöhten Sauerstoffkonzentration von Lambda > 1 aufgebaut, wobei die Meßatmosphäre über den Verbindungskanal weiter in den ersten Meßgasraum 13 gelangt. Die erste Diffusionsbarriere 23 bewirkt, daß der Sauerstoff nicht ungehindert in das Meßgas entweichen kann und im ersten Meßgasraum 13 ein erhöhter Sauerstoffpartialdruck erhalten bleibt.

Wesentlich für die Betriebsweise als HC-Sensor ist, daß die erste innere Elektrode 27 eine sogenannte vergiftete katalytisch aktive Elektrode ist, die als Mischpotentialelektrode keine oder zumindest keine vollständige Gleichgewichtseinstellung des Gasgemisches realisiert. Die Betriebsweise als HC-Sensor nutzt ferner die Tatsache, daß ein die HC-Konzentration repräsentierendes Meßsignal, das bei elektrochemischen Sensoren auftritt, sich nur im mageren Meßgas (Lambda > 1) in charakteristischer Weise vom Signalverlauf der Sauerstoffkonzentration unterscheidet.

Aufgrund der Tatsache, daß sich die höheren Sauerstoffkonzentration im ersten Meßgasraum 13 von der im Referenzkanal 19 unterscheidet, baut sich zwischen der als Mischpotentialelektrode wirkenden Elektrode 27 und der Elektrode 33 eine erste Spannung auf, die mit der HC-Konzentration und der Sauerstoffkonzentrationsdifferenz korreliert. Ein zweites Spannungssignal zwischen der katalytisch aktiven Elektrode 31 und der Elektrode 33 entspricht der Sauerstoffkonzentration im Meßgasraum 13. Die Differenz zwischen beiden Spannungen entspricht der HC-Konzentration im Meßgas. Diese Spannungsdifferenz liegt ebenfalls zwischen der Elektrode 27. und der Elektrode 31 an, so daß die zwischen den Elektroden 27, 31 abgegriffene Spannung als Meßsignal die HC Konzentration angibt. Es ist jedoch auch möglich, den von der Spannung zwischen den Elektoden 27, 31 angetriebenen Strom als Meßsignal aufzunehmen.

Die Elektrode 28 besitzt beim HC-Sensor keine Funktion und wird daher bei der Beschaltung des Sensorelements 10 nicht berücksichtigt.

Eine weitere Ausführungsform der Erfindung besteht darin, für die Verwendung als NOx-Sensor und HC-Sensor jeweils ein spezielles Sensorelement zu nutzen. Dabei wird vorzugsweise der gleiche Schichtaufbau der Festelektrolytschichten sowohl für den NOx-Sensor als auch für den HC-Sensor verwendet. Unterschiede bestehen beim Material für die Elektrode 27 und die Elektrode 35. Bei einem NOx-Sensor kann dann die Elektrode 31 nicht aus einem Mischpotentialmaterial hergestellt werden, sondern kann aus dem gleichen Material wie die Elektrode 27 bestehen. Bei einem HC-Sensor muß das Material der Elektrode 35 nicht NOx-reduzierend sein, sondern kann aus dem gleichen Material wie die Elektrode 31 oder auch dem der Elektrode 27 bestehen. Da die Elektroden in Dickschichttechnik auf die keramischen Folien aufgebracht werden, besitzt eine derartige Ausführungsform immer noch Kostenvorteile, weil die Anzahl der Folien und die kostenaufwendige Laminiertechnik identisch bleibt.

Der Sensor eignet sich außerdem zur Bestimmung von Ammoniak in Gasgemischen. Dazu wird in die erste Diffusionsbarriere 23 Platin eingelagert, das aufgrund seiner katalytischen Wirkung eine Oxidation des Ammoniaks zu NOx realisiert.

## Patentansprüche

1. Elektrochemischer Gassensor zur Bestimmung der Konzentration von Gaskomponenten in Gasgemischen mit einem ersten Messgasraum (13), der mit dem Messgas in Verbindung steht, mit einem zweiten Messgasraum (15), der mit dem ersten Messgasraum (13) über einen Verbindungskanal (17) verbunden ist und der im übrigen vom ersten Messgasraum durch mindestens eine sauerstoffionenleitende Schicht (11 c) getrennt ist, wobei beide Messgasräume (13, 15) in übereinander liegenden Schichtebenen angeordnet sind, mit einer ersten Elektrode (27) und einer zweiten Elektrode (31), die jeweils im ersten Messgasraum (13) angeordnet sind, mit mindestens einer im zweiten Messgasraum (15) angeordneten dritten Elektrode (35) und mit mindestens einer vierten Elektrode (33), **dadurch gekennzeichnet, dass** die dritte Elektrode (35) aus zwei sich im zweiten Messgasraum (15) gegenüberliegenden Teilelektroden besteht.

2. Gassensor nach Anspruch 1, **dadurch gekennzeichnet, dass** mindestens zwei Gaseintrittsöffnungen (21) in den ersten Messgasraum (13) führen, die symmetrisch zu einer durch die Mittellinie des Verbindungskanals (17) verlaufenden Ebene angeordnet sind.

3. Gassensor nach Anspruch 1 oder 2, **dadurch gekennzeichnet, dass** die dritte Elektrode (35) ein Material enthält, das die Gaskomponente NOx zu reduzieren vermag.

4. Gassensor nach Anspruch 3, **dadurch gekennzeichnet, dass** die dritte Elektrode (35) Rhodium oder eine Rhodium/Platin-Legierung enthält.

5. Gassensor nach einem der vorhergehenden Ansprüche, **dadurch gekennzeichnet, dass** im ersten Messgasraum (13) die erste Elektrode (27) und die zweite Elektrode (31) in Diffusionsrichtung des eindiffundierenden Messgases hintereinander liegen.

6. Gassensor nach einem der vorhergehenden Ansprüche, **dadurch gekennzeichnet, dass** die erste Elektrode (27) ein Material enthält, dass die Gleichgewichtseinstellung des Gasgemisches nicht oder nicht vollständig zu katalysieren vermag.

7. Gassensor nach Anspruch 6, **dadurch gekennzeichnet, dass** die erste Elektrode (27) Gold oder eine Platin/Gold-Legierung enthält.

8. Gassensor nach einem der vorhergehenden Ansprüche, **dadurch gekennzeichnet, dass** eine dem Messgas ausgesetzte weitere Elektrode (28) vorgesehen ist, die mit der ersten Elektrode (27) eine Pumpzelle bildet, mit der im ersten Messgasraum (13) ein im wesentlichen konstanter Sauerstoffpartialdruck einstellbar ist, und dass die dritte Elektrode (35) mit der vierten Elektrode (33) zu einer weiteren Pumpzelle geschaltet ist, deren Pumpstrom als Messsignal aufnehmbar ist.

9. Gassensor nach einem der vorhergehenden Ansprüche, **dadurch gekennzeichnet, dass** die zweite Elektrode (31) und die vierte Elektrode (33) eine auf einen konstanten Spannungswert geregelte Konzentrationszelle bilden.

10. Gassensor nach einem der vorhergehenden Ansprüche, **dadurch gekennzeichnet, dass** die dritte und die vierte Elektrode (33, 35) als Pumpzelle zum Pumpen von Sauerstoff in den zweiten Messgasraum (15) geschaltet sind und dass die erste Elektrode (27) als Mischpotentialelektrode ausgebildet ist und mit der vierten Elektrode (33) eine Konzentrationszelle bildet, deren Spannung als Messsignal aufnehmbar ist.

11. Elektrochemischer Gassensor zur Bestimmung der Konzentration von Gaskomponenten in Gasgemischen mit einem ersten Messgasraum (13), der mit dem Messgas in Verbindung steht, mit einem zweiten Messgasraum (15), der mit dem ersten Messgasraum (13) über einen Verbindungskanal (17) verbunden ist, mit einer ersten Elektrode (27) und einer zweiten Elektrode (31), die jeweils im ersten Messgasraum (13) angeordnet sind, mit mindestens einer im zweiten Messgasraum (15) angeordneten dritten Elektrode (35) und mit mindestens einer vierten Elektrode, wobei die erste Elektrode (31) ein Material enthält, das die Gleichgewichtseinstellung des Gasgemisches nicht oder nicht vollständig zu katalysieren vermag, und wobei die dritte Elektrode (35) ein Material enthält, das die Gaskomponente NOx zu reduzieren vermag, **dadurch gekennzeichnet, dass** die dritte Elektrode (35) aus zwei sich im zweiten Messgasraum (15) gegenüberliegenden Teilelektroden besteht.

12. Gassensor nach Anspruch 11, **dadurch gekennzeichnet, dass** die erste Elektrode (27) Gold oder eine Platin/Gold-Legierung enthält.

13. Gassensor nach Anspruch 12, **dadurch gekennzeichnet, dass** der Goldanteil in der Platin/Gold-Legierung 0,5 bis 3 Gew.%, vorzugsweise 1 Gew.% beträgt.

14. Gassensor nach einem der Ansprüche 11 bis 13, **dadurch gekennzeichnet, dass** die dritte Elektrode (35) Rhodium oder eine Rhodium/Platin-Legierung enthält.

15. Gassensor nach einem der Ansprüche 11 bis 14, **dadurch gekennzeichnet, dass** die beiden Messgasräume (13, 15) im übrigen durch mindestens eine sauerstoffionenleitende Schicht voneinander getrennt in übereinander liegenden Schichtebenen angeordnet sind und dass der Verbindungskanal (17) durch die sauerstoffionenleitende Schicht geführt ist.

## Claims

1. Electrochemical gas sensor for determining the concentration of gas components in gas mixtures, with a first measuring gas chamber (13), which is connected to the measuring gas, with a second measuring gas chamber (15), which is connected to the first measuring gas chamber (13) via a connecting channel (17) and is otherwise separated from the first measuring gas chamber by at least one oxygen ion-conducting layer (11c), the two measuring gas chambers (13, 15) being arranged in superposed layer planes, with a first electrode (27) and a second electrode (31), which are respectively arranged in the first measuring gas chamber (13), with at least one third electrode (35), arranged in the second measuring gas chamber (15), and with at least one fourth electrode (33), **characterized in that** the third electrode (35) comprises two part-electrodes lying opposite each other in the second measuring gas chamber (15).

2. Gas sensor according to Claim 1, **characterized in that** at least two gas inlet openings (21), which are arranged symmetrically in relation to a plane running through the centre line of the connecting channel (17), lead into the first measuring gas chamber (13).

3. Gas sensor according to Claim 1 or 2, **characterized in that** the third electrode (35) contains a material which is able to reduce the gas component NOx.

4. Gas sensor according to Claim 3, **characterized in that** the third electrode (35) contains rhodium or a rhodium/platinum alloy.

5. Gas sensor according to one of the preceding claims, **characterized in that**, in the first measuring gas chamber (13), the first electrode (27) and the second electrode (31) lie one behind the other in the direction of diffusion of the measuring gas diffusing in.

6. Gas sensor according to one of the preceding claims, **characterized in that** the first electrode (27) contains a material which is not able to catalyze or catalyze completely the equilibrium setting of the gas mixture.

7. Gas sensor according to Claim 6, **characterized in that** the first electrode (27) contains gold or a platinum/gold alloy.

8. Gas sensor according to one of the preceding claims, **characterized in that** a further electrode (28) that is exposed to the measuring gas is provided and forms with the first electrode (27) a pumping cell, with which a substantially constant oxygen partial pressure can be set in the first measuring gas chamber (13), and **in that** the third electrode (35) is connected with the fourth electrode (33) to form a further pumping cell, the pumping current of which can be picked up as a measuring signal.

9. Gas sensor according to one of the preceding claims, **characterized in that** the second electrode (31) and the fourth electrode (33) form a concentration cell controlled to a constant voltage value.

10. Gas sensor according to one of the preceding claims, **characterized in that** the third and fourth electrodes (33, 35) are connected as a pumping cell for pumping oxygen into the second measuring gas chamber (15) and **in that** the first electrode (27) is formed as a mixed potential electrode and with the fourth electrode (33) forms a concentration cell, the voltage of which can be picked up as a measuring signal.

11. Electrochemical gas sensor for determining the concentration of gas components in gas mixtures, with a first measuring gas chamber (13), which is connected to the measuring gas, with a second measuring gas chamber (15), which is connected to the first measuring gas chamber (13) via a connecting channel (17), with a first electrode (27) and a second electrode (31), which are respectively arranged in the first measuring gas chamber (13), with at least one third electrode (35), arranged in the second measuring gas chamber (15), and with at least one fourth electrode, the first electrode (27) containing a material which is not able to catalyze or catalyze completely the equilibrium setting of the gas mixture, and the third electrode (35) containing a material which is able to reduce the gas component NOx, **characterized in that** the third electrode (35) comprises two part-electrodes lying opposite each other in the second measuring gas chamber (15).

12. Gas sensor according to Claim 11, **characterized in that** the first electrode (27) contains gold or a platinum/gold alloy.

13. Gas sensor according to Claim 12, **characterized in that** the gold component in the platinum/gold alloy is 0.5 to 3% by weight, preferably 1% by weight.

14. Gas sensor according to one of Claims 11 to 13, **characterized in that** the third electrode (35) contains rhodium or a rhodium/platinum alloy.

15. Gas sensor according to one of Claims 11 to 14, **characterized in that** the two measuring gas chambers (13, 15), being otherwise separated from one another by at least one oxygen ion-conducting layer, are arranged in superposed layer planes and **in that** the connecting channel (17) is led through the oxygen ion-conducting layer.

## Revendications

1. Détecteur électrochimique de gaz pour déterminer la concentration de composante gazeux dans des mélanges gazeux, comprenant une première chambre de mesure de gaz (13) en communication avec le gaz à mesurer, une deuxième chambre de mesure de gaz (15) en communication avec la première chambre de mesure de gaz (13) par un canal de liaison (17) et séparée en outre de la première chambre de mesure de gaz par au moins une couche (11 c) conductrice d'ions d'oxygène, les deux chambres de mesure de gaz (13, 15) étant disposées dans des plans de couche superposés, avec une première électrode (27) et une deuxième électrode (31) disposées dans la première chambre de mesure de gaz (13), et au moins une troisième électrode (35) disposée dans la deuxième chambre de mesure de gaz (35), et avec au moins une quatrième électrode (33),
**caractérisé en ce que**
la troisième électrode (35) est composée de deux électrodes partielles se faisant face dans la deuxième chambre de mesure de gaz (15).

2. Détecteur de gaz selon la revendication 1,
**caractérisé en ce qu'**
au moins deux ouvertures d'entrée de gaz (21) conduisent dans la première chambre de mesure de gaz (13), et sont disposées symétriquement à un plan passant par la ligne médiane du canal de liaison (17).

3. Détecteur de gaz selon la revendication 1 ou 2,
**caractérisé en ce que**
la troisième électrode (35) contient un matériau capable de réduire le composant gazeux NOx.

4. Détecteur de gaz selon la revendication 3,
**caractérisé en ce que**
la troisième électrode (35) contient du rhodium ou un alliage rhodium/platine.

5. Détecteur de gaz selon l'une quelconque des revendications précédentes,
**caractérisé en ce que**
dans la première chambre de mesure de gaz (13) la première électrode (27) et la deuxième électrode (31) se situent l'une derrière l'autre dans la direction de diffusion du gaz à mesurer entrant.

6. Détecteur de gaz selon l'une quelconque des revendications précédentes,
**caractérisé en ce que**
la première électrode (27) contient un matériau qui n'est pas capable de catalyser entièrement ou partiellement le réglage de l'équilibre du mélange gazeux.

7. Détecteur de gaz selon la revendication 6,
**caractérisé en ce que**
la première électrode (27) contient de l'or ou un alliage platine/or.

8. Détecteur de gaz selon l'une quelconque des revendications précédentes,
**caractérisé en ce qu'**
une autre électrode (28) exposée au gaz à mesurer est prévue qui forme avec la première électrode (27) une cellule de pompage permettant de régler dans la première chambre de mesure de gaz (13) une pression partielle d'oxygène essentiellement constante, et la troisième électrode (35) est reliée à la quatrième électrode (33) pour former une autre cellule de pompage dont le courant de pompage peut être enregistré en forme de signal de mesure.

9. Détecteur de gaz selon l'une quelconque des revendications précédentes,
**caractérisé en ce que**
la deuxième électrode (31) et la quatrième électrode (33) forment une cellule de concentration réglée sur une valeur de tension constante.

10. Détecteur de gaz selon l'une quelconque des revendications précédentes,
**caractérisé en ce que**
la troisième et la quatrième électrodes (33, 35) constituent une cellule de pompage pour pomper de l'oxygène dans la deuxième chambre de mesure de gaz (15), et la première électrode (27) est une électrode à potentiel de mélange et forme avec la quatrième électrode (33) une cellule de concentration dont la tension peut être enregistrée comme signal de mesure.

11. Détecteur électrochimique de gaz pour déterminer la concentration de composants gazeux dans des mélanges gazeux, comprenant une première chambre de mesure de gaz (13) en communication avec le gaz à mesurer, une deuxième chambre de mesure de gaz (15) en communication avec la première chambre de mesure de gaz (13) par un canal de liaison (17), avec une première électrode (27) et une deuxième électrode (31) disposées dans la première chambre de mesure de gaz (13), avec au moins une troisième électrode (35) disposée dans la deuxième chambre de mesure de gaz (35), et avec au moins une quatrième électrode, la première électrode (27) contenant un matériau qui n'est pas capable de catalyser entièrement ou partiellement le réglage de l'équilibre du mélange gazeux, et la troisième électrode (35) contenant un matériau capable de réduire le composant gazeux NOx,
**caractérisé en ce que**
la troisième électrode (35) est composée de deux électrodes partielles se faisant face dans la première chambre de mesure de gaz (15).

12. Détecteur de gaz selon la revendication 11,
**caractérisé en ce que**
la première électrode (27) contient de l'or ou un alliage platine/or.

13. Détecteur de gaz selon la revendication 12,
**caractérisé en ce que**
la proportion d'or dans l'alliage platine/or est de 0,5 à 3 % en poids, de préférence de 1 % en poids.

14. Détecteur de gaz selon l'une des revendications 11 à 13,
**caractérisé en ce que**
la troisième électrode (35) contient du rhodium ou un alliage rhodium/ platine.

15. Détecteur de gaz selon l'une des revendications 11 à 14,
**caractérisé en ce que**
les deux chambres de mesure de gaz (13, 15) sont en outre séparées l'une de l'autre par au moins une couche conductrice d'ions d'oxygène et disposées dans des plans de couche superposés, et le canal de liaison (17) traverse la couche conductrice d'ions d'oxygène.
